Europäisches Patentamt

European Patent Office

Office européen des brevets

(19)

(11) Veröffentlichungsnummer: **0 034 737**
**B1**

(12) **EUROPÄISCHE PATENTSCHRIFT**

(45) Veröffentlichungstag der Patentschrift:
**11.07.84**

(51) Int. Cl.³: **H 04 N 5/14**

(21) Anmeldenummer: **81100848.1**

(22) Anmeldetag: **06.02.81**

(54) **Verfahren zur Verbesserung der Auflösung eines Videobildes.**

(30) Priorität: **13.02.80 CH 1155/80**

(43) Veröffentlichungstag der Anmeldung:
**02.09.81 Patentblatt 81/35**

(45) Bekanntmachung des Hinweises auf die Patenterteilung:
**11.07.84 Patentblatt 84/28**

(84) Benannte Vertragsstaaten:
**AT DE FR GB IT NL SE**

(56) Entgegenhaltungen:
**US - A - 3 558 816**

**APPLIED OPTICS, Band 15, Nr. 2, Februar 1976 Los Angeles, California (US) ANDREWS: "Monochrome digital image enhancement", Seiten 495-503**
**W.K. Pratt Digital image processing, 1978, J. Wiley & Sons, Inc. New York, Seiten 307-317**

(73) Patentinhaber: **SIEMENS-ALBIS AKTIENGESELLSCHAFT, EGA1/Verträge und Patente Postfach, CH-8047 Zürich (CH)**

(72) Erfinder: **Tschannen, Gottfried, Seebahnstrasse 177/153, CH-8004 Zürich (CH)**

## Beschreibung

Die vorliegende Erfindung betrifft ein Verfahren zur Verbesserung der Auflösung eines Videobildes nach dem Oberbegriff des Patentanspruches 1.

Durch die Regelung der Verstärkung und/oder des Gleichstrompegels eines Videosignals bei Aufnahme und/oder bei Wiedergabe kann die Bildauflösung und damit die Erkennbarkeit einzelner Gegenstände eines Videobildes beeinflusst werden. Im ersten Fall spricht man von einer Regelung des Kontrastes, im zweiten Fall von einer Regelung der Grundhelligkeit. In verschiedenen Anwendungsfällen, beispielsweise bei einem Infrarot-Zielgerät, ist es wünschenswert, die genannten Regelungsvorgänge automatisch ablaufen zu lassen. Dadurch wird das Bedienungspersonal von dieser Aufgabe entlastet und kann sich auf andere Dinge konzentrieren. Unter Umständen wird dadurch ausserdem dessen Schulung vereinfacht.

Die bisher bekannten automatischen Regeleinrichtungen messen bei der Aufnahme üblicherweise die Helligkeit des Bildes oder eines Bildausschnittes integral. Bei der Wiedergabe wird die Helligkeit aufgrund dieser Messung jeweils auf einen mittleren Wert eingestellt. Diese Methode hat insbesondere bei ungewöhnlichen Lichtverhältnissen Nachteile. Ist der Hintergrund sehr hell und das Objekt verhältnismässig klein, wird der im wesentlichen durch den Hintergrund bestimmte mittlere Helligkeitswert auf grau eingestellt. Das Objekt erscheint auf dem Bild grau in grau und ist somit schlecht erkennbar. Ein weiterer Nachteil der bekannten Regeleinrichtung ist es, dass die Regelung des Kontrastes unberücksichtigt bleibt.

Weiterhin ist bei der Darstellung eines Videobildes zu beachten, dass nur eine beschränkte Anzahl verschiedener Helligkeitswerte zur Verfügung steht. Es ist infolgedessen wenig sinnvoll, wenn in geringer Zahl auftretende extreme Helligkeitswerte, welche wenig zur Information des Bildes beitragen, auf dem Videobild dargestellt werden. Beispielsweise interessieren bei Infrarot-Videogeräten nicht die Temperaturunterschiede der extrem heissen Punkte eines Geschützrohres. Es genügt vollauf, wenn dieses hell und deutlich dargestellt ist. Dagegen ist eine kontrastreiche Darstellung der übrigen Objekte von Interesse, deren Temperatur keine Spitzenwerte erreichen. Auch bei Videogeräten, die im sichtbaren Lichtbereich arbeiten, ist meistens nicht die Darstellung der Helligkeit einer starken Lichtquelle im Vergleich zur Umgebung sondern die Umgebung selbst von Interesse.

Die Erfindung, wie sie in den Ansprüchen gekennzeichnet ist, löst die Aufgabe, mit möglichst einfachen Mitteln eine automatische Regelung der Verstärkung und der Grundhelligkeit eines Videosignals zu erzielen, welche auch bei ungünstigen Lichtverhältnissen ein kontrastreiches Bild liefert und vereinzelt auftretende extreme Helligkeitswerte nur begrenzt berücksichtigt.

Im folgenden werden anhand von Zeichnungen das erfindungsgemässe Verfahren und eine Schaltungsanordnung zur Durchführung dieses Verfahrens beispielsweise erläutert. Es zeigen:

Fig. 1a eine Arbeitskennlinie eines Video-Übertragungssystems,

Fig. 1b ein Beispiel einer Häufigkeitsverteilung der Helligkeitswerte eines Bildes,

Fig. 2 ein Prinzipschaltbild einer Anordnung zur Durchführung des angegebenen Verfahrens,

Fig. 3 Einzelheiten einer Schaltungsanordnung zur Durchführung des angegebenen Verfahrens.

Bei der Regelung der Grundhelligkeit, welche auch als Schwarzpegelregelung bezeichnet wird, wird ermittelt, wieviele Punkte des Bildes oder eines Teiles davon eine erste Helligkeitsschwelle $h1$ und wieviele Punkte eine zweite Helligkeitsschwelle $h2$ erreichen. Es ergeben sich drei Möglichkeiten:

a) Die Helligkeitsschwelle $h1$ wird von wenigstens $k1$ Bildpunkten unterschritten: Der Gleichstrompegel des Videosignals wird um eine Stufe erhöht.

b) Die Helligkeitsschwelle $h2$ wird zwar von $k2$ Bildpunkten, die Helligkeitsschwelle $h1$ jedoch von weniger als einer vorgegebenen Anzahl $k1$ von Bildpunkten unterschritten: Der Gleichstrompegel des Videosignals bleibt unverändert.

c) Die Helligkeitsschwelle $h2$ wird nicht von einer vorgegebenen Anzahl $k2$ von Bildpunkten unterschritten: Der Gleichstrompegel des Videosignals wird um eine Stufe gesenkt.

Die Kontrastregelung erfolgt in analoger Weise wie die Regelung der Grundhelligkeit. Jedoch wird in diesem Fall ermittelt, ob eine minimale Anzahl Bildpunkte eine dritte Helligkeitsschwelle $h3$ und wieviele Punkte eine vierte Helligkeitsschwelle $h4$ überschreiten. Es sind wiederum drei Fälle möglich:

a) Die Helligkeitsschwelle $h3$ wird nicht von einer vorgegebenen Anzahl $k3$ von Bildpunkten überschritten: Die Verstärkung des Videosignals wird um eine Stufe erhöht.

b) Die Helligkeitsschwelle $h3$ wird von mindestens $k3$ Bildpunkten, die Helligkeitsschwelle $h4$ jedoch von weniger als einer Anzahl $k4$ von Bildpunkten überschritten: Die Verstärkung des Videosignals bleibt unverändert.

c) Die Helligkeitsschwelle $h4$ wird von wenigstens $k4$ Bildpunkten überschritten: Die Verstärkung des Videosignals wird um eine Stufe verringert.

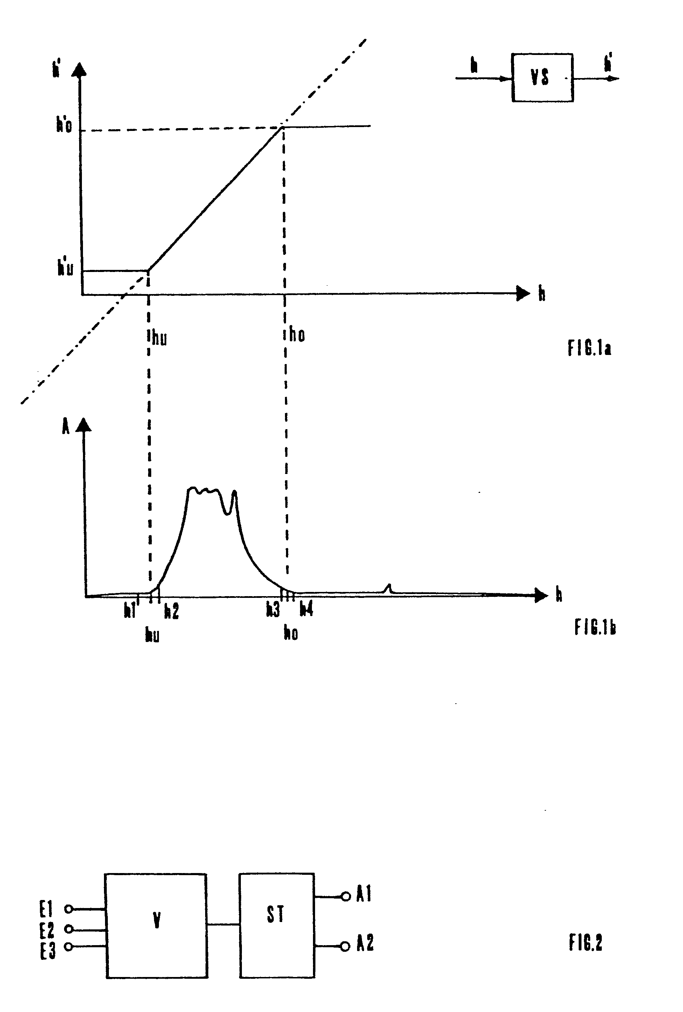

Bei der in Fig. 1a gezeigten Arbeitskennlinie eines Videoübertragungssystems VS sind auf der Abszisse durch das Signal des optoelektrischen Wandlers gegebene Helligkeitswerte $h$ und auf der Ordinate die für die Wiedergabe zur Verfügung stehenden Helligkeitswerte $h'$ des Monitors eingetragen. Die letzteren sind durch einen untersten und einen obersten Helligkeitswert $hu'$ bzw. $ho'$ begrenzt. Infolgedessen werden nur die zwischen einer untersten und einer obersten Grenze $hu$ bzw. $ho$ auftretenden Helligkeitswerte des Aufnahmesignals kontrastiert dargestellt. Bildpunkte, deren Helligkeitswert jenseits dieser Genzen $hu$ bzw. $ho$ liegt, werden jeweils mit minimaler bzw. maximaler Helligkeit $hu'$ bzw. $ho'$ wiedergegeben. Die Arbeitskennlinie verläuft demzufolge bezogen auf die Ordinate nicht von null bis unendlich, wie dies in der Zeichnung für den Fall eines idealen Videosystems VS mit einer strichpunktierten Linie angedeutet ist, sondern bleibt innerhalb der genannten Grenzen $hu'$ und $ho'$. Die Zeichnung geht von der Annahme aus, die Arbeitskennlinie verlaufe in diesem Bereich geradlinig. Es ist aber auch denkbar, dass für verschiedene Anwendungszwecke, z.B. bei Infrarotgeräten, welche häufig vor allem die eher niedrigere Temperaturen aufweisende Umgebung eines Geschützes oder Panzers detailliert wiedergeben sollen, ein im oberen Teil eine abnehmende Steigung aufweisender Verlauf der Kennlinie zweckmässig ist.

Bei der Häufigkeitsverteilung nach Fig. 1b sind auf der Abszisse wiederum durch ein Aufnahmesignal erfasste Helligkeitswerte h und auf der Ordinate die Anzahl A der einem bestimmten Helligkeitswert h zuzuordnenden Bildpunkte eingetragen. Ferner sind die bei der obigen Beschreibung des Regelprinzips genannten, vom jeweiligen Bild abhängigen Helligkeitsschwellen h1...h4 dargestellt. Durch das beschriebene Regelprinzip wird nun erreicht, dass die untere Schwelle hu in den durch die Helligkeitsschwellen h1 und h2 begrenzten Bereich, die obere Schwelle ho in den durch die Helligkeitsschwellen h3 und h4 begrenzten Bereich zu liegen kommt und infolgedessen die in grosser Zahl auftretenden und in der Regel vorwiegend zur gewünschten Bildinformation beitragenden Helligkeitswerte kontrastreich wiedergegeben werden.

In Fig. 2 ist das Blockschaltbild eines Schaltkreises zur Regelung der Verstärkung oder des Kontrastes gezeigt. Eine Vergleichsschaltung V weist drei Eingänge auf. Der Eingang E1 wird mit einem Helligkeitssignal hs, der Eingang E2 mit dem Bildtakt und der Eingang E3 nach Ablauf des Bildes resp. Bildausschnittes mit einem Rückstellimpuls beaufschlagt. In der Vergleichsschaltung V wird entsprechend dem weiter oben erläuterten Verfahren bei zwei Helligkeitsschwellen h1, h2 oder h3, h4 festgestellt, ob diese von je einer vorgegebenen Anzahl k1, k2 bzw. k3, k4 von Bildpunkten erreicht werden oder nicht. Die Vergleichsschaltung V ist mit einer Steuerschaltung ST verbunden, welche über die Anschlüsse A1 und A2 gegebenenfalls beim Videogerät eine gewünschte Änderung des Gleichstrompegels oder der Verstärkung bewirkt.

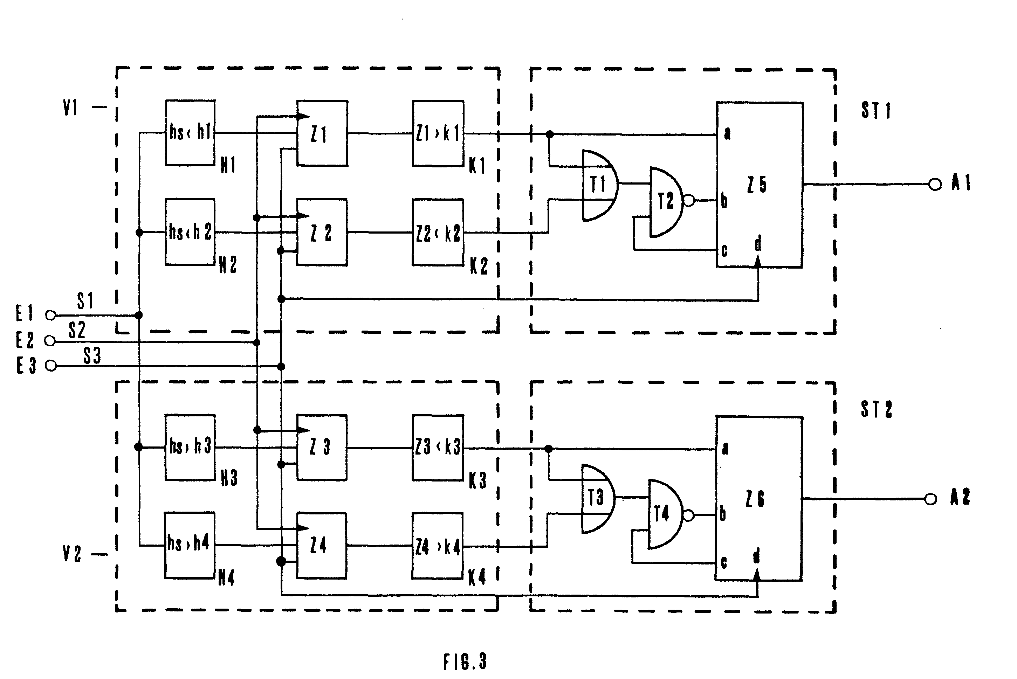

In Fig. 3 ist eine Schaltungsanordnung zur Durchführung des beschriebenen Verfahrens gezeigt, welche aus zwei mit einer durchbrochenen Linnie angedeuteten Schaltkreisen V1, ST1 sowie V2, ST2 gemäss dem Prinzip nach Fig. 2 aufgebaut ist. Bei den beiden Vergleichsschaltungen V1 und V2 sind vier Zähler Z1...Z4 mit ihrem Enable-Eingang über je einen Komparator H1...H4 am das Helligkeitssignal S1 bzw. hs führenden Eingang E1 angeschlossen. Ihre Takteingänge sind mit dem den Bildtakt S2 führenden Eingang E2 und ihre Rückstell-Eingänge mit dem den Rückstellimpuls S3 führenden Eingang E3 verbunden. Der Ausgang der Zähler Z1...Z4 führt jeweils zu einem Komparator K1...K4. Die Elemente der Vergleichsschaltung V1 sind mit den Index-Ziffern 1 und 2, die Elemente der Vergleichsschaltung V2 mit den Index-Ziffern 3 und 4 bezeichnet. Die Steuerstufe ST1 ist aus einem OR-Tor T1, einem NAND-Tor T2 und einem zum Ausgang A1 führenden Zähler Z5 aufgebaut. Der Komparator K1 ist einerseits mit dem Vorwärts-Zähleingang a und andererseits über das Tor T1 in Serie mit dem Tor T2 mit dem Enable-Eingang b des Zählers Z5 verbunden.

Der Komparator K2 ist an einem zweiten Eingang des Tores T1 angeschlossen. Das Tor T2 ist ferner mit dem am Ausgang c des Zählers Z5 anstehenden Übertragssignal beaufschlagt. Der am Eingang E3 anliegende Rückstellimpuls S3 wird dem Takteingang d des Zählers Z5 zugeführt. Die Steuerstufe ST2 besteht aus einem OR-Tor T3, einem NAND-Tor T4 und einem zum Ausgang A2 führenden Zähler Z6. Im Ausführungsbeispiel ist als Zähler Z5 ein Zählertyp vorgesehen, der entsprechend dem am Steuereingang a anliegenden Signal vorwärts oder rückwärts zählt und der über den Enable-Eingang b blockiert werden kann, wobei einerseits beim Vorwärts-Zählen das Maximum und beim Rückwärts-Zählen das Minimum angezeigt wird. Ein derartiger Zählertyp wird von verschiedenen Herstellern unter der Nummer 4029 als integrierter C-MOS-Baustein angeboten. Wie Fig. 3 entnommen werden kann, ist die Steuerstufe ST2 im Aufbau identisch mit der Steuerstufe ST1.

Das Zusammenwirken der einzelnen Komponenten wird anhand des oberen Schaltkreises V1, ST1 erläutert. In den Komparatoren H1 und H2 wird das Helligkeitssignal hs mit einem Helligkeitswert h1 bzw. h2 verglichen. Mit den Zählern Z1 und Z2 werden die Bildpunktsignale ermittelt, deren Helligkeit hs unter dem Helligkeitswert h1 bzw. über dem Helligkeitswert h2 liegt. Falls ein Bildpunktsignal hs den Helligkeitswert h1 unter- bzw. h2 überschreitet, erscheint ein Signal am Enable-Eingang des betreffenden Zählers und der entsprechende Bildpunkt wird gezählt. Unterschreiten mehr als k1 Bildpunkte den Helligkeitswert h1, zählt der Zähler Z5 vorwärts und bewirkt bei einem Taktimpuls eine Erhöhung des am Ausgang A1 anstehenden Zählwertes um eine Zähleinheit, was eine Anhebung des Gleichstrompegels des Videosignals hs zur Folge hat. Falls jedoch weniger als k2 Bildpunkte den Helligkeitswert h2 unterschreiten, zählt der Zähler Z5 rückwärts und bewirkt bei einem Taktimpuls eine Reduktion der am Ausgang A1 anstehenden Zahl um eine Zähleinheit und damit eine Absenkung des Gleichstrompegels des Videosignals hs. Damit der Zähler bei der maximal möglichen Ausgangszahl bzw. beim maximalen Gleichstrompegel trotz gegebenenfalls eintreffenden Vorwärts-Zählimpulsen stehen bleibt, wird er über den Enable-Eingang b durch ein Übertragungssignal des Ausgangs c blockiert. Das Übertragungssignal blockiert den Zähler ebenfalls, wenn als unterster Wert die Zahl 0 erreicht wird. Der Zähler Z5 ist blockiert, falls weniger als k1 Bildpunkte den Helligkeitswert h1 unterschreiten und zugleich mehr als k2 Bildpunkte den Helligkeitswert h2 überschreiten. Bei verschiedenen Zählertypen (z.B. beim 4029) besteht die Möglichkeit, eine gewünschte Zahl über einen separaten Eingang unabhängig vom Zählerstand am Ausgang erscheinen zu lassen. Sofern für den die Verstärkung bzw. den Gleichstrompegel beeinflussenden Zähler Z5 ein derartiger Zählertyp vorgesehen ist, kann durch eine manuelle Eingabe von Zahlwerten eine manuelle Steuerung der Verstärkung bzw. des Gleichstrompegels vorgenommen werden. Erfolgt die Regelung der Grundhelligkeit nicht digital, muss ein Digital-/Analog-Wandler nachgeschaltet werden. In einem solchen Fall wäre es auch denkbar, anstelle eines Zählers Z5 einen Integrator zu verwenden.

Die Regelung der Verstärkung erfolgt in analoger Weise mit dem Schaltkreis V2, ST2. Falls weniger als k3 Bildpunkte den Helligkeitswert h3 überschreiten, zählt der Zähler Z6 um eine Einheit vorwärts und bewirkt damit eine Erhöhung der Verstärkung. Falls mehr als k4 Bildpunkte den Helligkeitswert h4 unterschreiten, zählt der Zähler Z6 um eine Einheit rückwärts. Dadurch wird die Verstärkung reduziert.

Im beschriebenen Beispiel richtet sich die Regelung der Grundhelligkeit nach einer minimalen Anzahl durch die Helligkeitsschwellen h1 und h2 charakterisierter dunkelster Bildpunkte und die Regelung des Kontrastes nach einer minimalen Anzahl durch die Helligkeitsschwellen h3 und h4 charakterisierter hellster Bildpunkte. Es könnte jedoch ebensogut die Regelung der Grundhelligkeit nach einer vorgegebenen Anzahl hellster Bildpunkte und die Regelung des Kontrastes nach einer vorgegebenen Anzahl dunkelster Bildpunkte erfolgen. Es ist vorteilhaft, k2 wenigstens gleich gross wie k1 zu wählen und eine Änderungsstufe des Gleichstrompegels sowie die Helligkeitsschwellen so aufeinander abzustimmen, dass ein Bildpunkt der Helligkeit h1 die Helligkeit h2 erreicht, wenn der Gleichstrompegel um eine Stufe erhöht wird. Dadurch wird erreicht, dass ein Grossteil der k1 die Helligkeitsschwelle h1 unterschreitenden Bildpunkte in den Helligkeitsbereich zwischen h1 und h2 fällt und infolgedessen kontrastiert, d.h. mit unterschiedlichen Lichtintensitäten dargestellt wird. Entsprechendes gilt für die Wahl von k3, k4 und h3, h4.

**Patentansprüche**

1. Verfahren zur Verbesserung der Auflösung eines Videobildes durch Regelung der Grundhelligkeit und/oder des Kontrastes, indem die Verstärkung bzw. der Gleichstrompegel des Videosignals selbsttätig geregelt wird, wobei die Bildpunkte extremer unterer und oberer Helligkeit aufgrund einer Häufigkeitsverteilung mit einem einheitlichen vorgegebenen untersten bzw. obersten Helligkeitswert wiedergegeben werden, dadurch gekennzeichnet, dass durch zwei unabhängig voneinander durchgeführte Regelungsvorgänge jeweils unterschiedlich entweder die Grundhelligkeit oder der Kontrast des Videosignals anhand von je zwei vorgegebenenn Helligkeitsschwellen h1, h2 bzw. h3 und h4 für jeden Regelungsvorgang geregelt wird, die die Bedingungen h1 < h2 und h3 < h4 erfüllen, dass alle Bildpunkte des ganzen Bildes oder eines ausgesuchten Teiles davon, unabhängig von ihrem Standort auf dem Bild, auf die Helligkeit h untersucht werden, um festzustellen, welche Anzahlen ka, kb, kc und kd von Bildpunkten aus ihrer gesamten Anzahl K sich in den Helligkeitsbereichen h < h1, h < h2, h > h3 bzw. h > h4 befinden, wobei je ein Grenzwert k1, k2, k3 und k4 für jede Anzahl dieser Bildpunkte ka, kb, kc bzw. kd vorbestimmt wird, dass der eine Regelungsvorgang derart auf den entsprechenden Regelungsparameter wirkt, dass wenn ka > k1 ist, die Anzahl ka verringert wird, wenn kb < k2 ist, die Anzahl kb erhöht wird, und wenn ka < k1 und kb > k2 ist, keine Wirkung eintritt, wobei als Regelungsparameter bei der Regelung der Grundhelligkeit der Gleichstrompegel des Videosignals und bei der Regelung des Kontrastes die Verstärkung des Videosignals gilt, und dass der andere Regelungsvorgang derart auf den entsprechenden Regelungsparameter wirkt, dass wenn kc < k3 ist, die Anzahl kc erhöht wird, wenn kd > k4 ist, die Anzahl kd verringert wird, und wenn kc > k3 und kd < k4 ist, keine Wirkung eintritt.

2. Verfahren nach Anspruch 1, dadurch gekennzeichnet, dass die vier Grenzwerte zumindest angenähert die Bedingungen k1 = k2 und k3 = k4 erfüllen.

3. Verfahren nach Anspruch 1 oder 2, dadurch gekennzeichnet, dass im Falle dass eine Wirkung eintritt, der Betrag der entsprechenden Änderung der Verstärkung bzw. des Gleichstrompegels derart gewählt wird, dass zumindest angenähert ein Bildpunkt des einen Helligkeitswertes (h1 bzw. h3) den anderen Helligkeitswert (h2 bzw. h4) desselben Regelungsvorganges erreicht.

4. Verfahren nach Anspruch 1 bis 3, dadurch gekennzeichnet, dass für die Regelung der Verstärkung zwei Helligkeitswerte (h1, h2) im untersten und für die Regelung des Gleichstrompegels zwei Helligkeitswerte (h3, h4) im obersten Helligkeitsbereich des Videosignals gewählt werden.

5. Verfahren nach einem der Ansprüche 1 bis 3, dadurch gekennzeichnet, dass für die Regelung der Verstärkung zwei Helligkeitswerte (h3, h4) im obersten und für die Regelung des Gleichstrompegels zwei Helligkeitswerte (h1, h2) im untersten Helligkeitsbereich des Videosignals gewählt werden.

6. Schaltungsanordnung zur Durchführung des Verfahrens nach Anspruch 1, dadurch gekennzeichnet, dass für jeden Regelungsvorgang jeweils zwei, das Helligkeitssignal (hs) mit einem vorgegebenen Helligkeitsschwellenwert (h1, h2; h3, h4) vergleichende Komparatoren (H1, H2; H3, H4) vorgesehen sind, von denen jeder ausgangsseitig mit dem Enable-Eingang je eines Zählers (Z1, Z2; Z3, Z4) verbunden ist, der zusätzlich jeweils mit dem Bildtakt (S2) sowie mit den das Bildende signalisierenden Rückstellimpulsen (S3) beaufschlagt ist, und dass der Ausgang jedes Zählers (Z1, Z2; Z3, Z4) über je einen weiteren Komparator (K1, K2; K3, K4), der die Anzahl der empfangenen Impulse mit dem entsprechenden vorgegebenen Grenzwert (k1, k2; k3, k4) vergleicht, mit je einem Eingang einer auch mit den das Bildende signalisierenden Rückstellimpulsen (S3) beaufschlagten Steuerschaltung (ST1) verbunden ist.

7. Schaltungsanordnung nach Anspruch 6, dadurch gekennzeichnet, dass die Steuerschaltung (ST1) mit einem Vorwärts-/Rückwärtszähler aufgebaut ist.

**Claims**

1. A method for improving the resolution of a video image by regulating the background brightness and/or the contrast, in that the amplification or the direct current level, as the case may be, of the video signal is automatically regulated, where the image dots of extreme lower and upper brightness are represented by a uniform predetermined lowest or uppermost brightness value on the basis of an accumulation distribution, characterised in that by means of two regulation steps carried out independently, in each case either the background brightness or the contrast of the video signal is respectively regulated in a discriminating manner with the aid of two predetermined brightness thresholds, $h1$, $h2$ or $h3$ and $h4$ for each regulating step, which regulation steps fulfil the conditions $h1 < h2$ and $h3 < h4$, that all image dots of the entire image or of a selected component thereof are examined as to the brightness h independently of their location on the image in order to determine which numbers $ka$, $kb$, $kc$ and $kd$ of image dots from their total number K are present in the brightness regions $h < h1$, $h < h2$, $h > h3$ and $h > h4$, where a limit value $k1$, $k2$, $k3$ and $k4$ is predetermined for each number of these image dots $ka$, $kb$, $kc$ and $kd$, that the regulation step affects the corresponding regulation parameter in such manner that if $ka > k1$ the number $ka$ is reduced, if $kb < k2$ the number $kb$ is increased and if $ka < k1$ and $kb > k2$ no effect occurs, the regulation parameter when regulating the background brightness the direct current level of the video signal is considered and when regulating the contrast the amplification of the video signal is considered, and that the other regulation step affects the corresponding regulation parameter in such a manner that if $kc < k3$ the number $kc$ is increased, if $kd > k4$ the number $kd$ is reduced, and if $kc > k3$ and $kd < k4$ no effect occurs.

2. A method as claimed in claim 1, characterised in that the four limit values at least approximately fulfil the conditions $k1 = k2$ and $k3 = k4$.

3. A method as claimed in claim 1 or 2, characterised in that when an effect occurs the amount of the corresponding change of amplification or direct current level, as the case may be, is selected to be such that an image point of one brightness value ($h1$ and $h3$) at least approximately reaches the other brightness value ($h2$ and $h4$) of the same regulation step.

4. A method as claimed in claim 1 to 3, characterised in that two brightness values ($h1$, $h2$) in the lowest brightness region of the video signal are selected for the regulation of the amplification, and two brightness values ($h3$, $h4$) in the uppermost brightness range of the video signal are selected for the regulation of the direct current level.

5. A method as claimed in one of claims 1 to 3, characterised in that two brightness values ($h3$, $h4$) in the uppermost brightness range of the video signal are selected for the regulation of the amplification and two brightness values ($h1$, $h2$) in the lowest brightness range of the video signal are selected for the regulation of the direct current level.

6. A circuit arrangement for implementation of the method as claimed in claim 1, characterised in that for each regulation step there are arranged two commparators (H1, H2; H3, H4) to compare the brightness signal (hs) with a predetermined brightness threshold value ($h1$, $h2$; $h3$, $h4$), each of which is connected to the enable-input of a counter (Z1, Z2; Z3, Z4) at the output end, which counter is in each case additionally supplied with the image rate (S2) and with the resetting pulses (S3) signalling the image end, and that by means of a further comparator (K1, K2; K3, K4) which compares the number of received pulses with the corresponding predetermined limit value ($k1$, $k2$; $k3$, $k4$), the output of each counter (Z1, Z2; Z3, Z4) is connected to an input of a control circuit (ST1) which is supplied with the resetting pulses (S3) signalling the image end.

7. A circuit arrangement as claimed in claim 6, characterised in that the control circuit (ST1) is constructed with a forwards/backwards counter.

## Revendications

1. Procédé pour améliorer la résolution d'une image vidéo par réglage de la luminosité de fond et/ou du contraste, l'amplification ou le niveau du courant continu du signal vidéo étant réglé automatiquement, du type dans lequel les points d'image de luminosité inférieure et supérieure extrême étant restitués, en raison d'une distribution des accumulations, avec une valeur uniforme et prédéterminée de la luminosité la plus faible ou la plus forte, caractérisé par le fait que par deux opérations de réglage réalisées indépendamment l'une de l'autre, on règle respectivement et de façon différente soit la luminosité de fond ou le contraste du signal vidéo à l'aide de respectivement deux seuils de luminosité $h1$, $h2$ ou $h3$ et $h4$ pour chaque opération de réglage, qui satisfont les conditions $h1 < h2$ et $h3 < h4$, que tous les points d'image de l'image entière ou d'une partie sélectionnée de celle-ci et indépendamment de son emplacement dans l'image, sont examinés du point de vue de la luminosité h afin de déterminer les nombres $ka$, $kb$, $kc$ et $kd$ de points d'image parmi son nombre total K se situent dans les plages de luminosité $h < h1$, $h < h2$, $h > h3$ et $h > h4$, une valeur limite $k1$, $k2$, $k3$ et $k4$ étant respectivement prédéterminée pour chaque nombre de ces points d'image $ka$, $kb$, $kc$ et $kd$, que l'une des opérations de réglage agit de telle façon sur le paramètre de réglage correspondant, que si $ka > k1$, le nombre $ka$ est diminué, si $kb < k2$ le nombre $kb$ est augmenté et si $ka < k1$ et $kb > k2$, aucune action n'intervient, le paramètre de réglage lors du réglage de la luminosité de fond est le niveau du courant continu du signal vidéo et lors du réglage du contraste, l'amplification du signal vidéo et que l'autre opération de réglage agit de telle façon sur le paramètre de réglage correspondant que si $kc < k3$, le nombre $kc$ est augmenté, si $kd > k4$, le nombre $kd$ est diminué, et si $kc > k3$ et $kd < k4$, aucune action n'intervient.

2. Procédé selon la revendication 1, caractérisé par le fait que les quatre valeurs limités satisfont, au moins approximativement les conditions $k1 = k2$ et $k3 = k4$.

3. Procédé selon la revendication 1 ou 2, caractérisé par le fait que dans le cas où une action intervient, la valeur de la modification correspondante de l'amplification ou du niveau de courant continu est choisie de telle façon qu'au moins approximativement un point d'image ayant l'une ($h1$ ou $h3$) des valeurs de la luminosité atteint la valeur de la luminosité ($h2$ ou $h4$) de la même opération de réglage.

4. Procédé selon les revendications 1 à 3, caractérisé par le fait que pour le réglage de l'amplification, on choisit deux valeurs de luminosité (h1, h2) dans la plage de luminosité la plus inférieure du signal vidéo, et pour le réglage de niveau du courant continu deux valeurs de luminosité (h3, h4) dans la plage de luminosité supérieure du signal vidéo.

5. Procédé selon l'une des revendications 1 à 3, caractérisé par le fait que pour le réglage de l'amplification on choisit deux valeurs de luminosité (h3, h4) dans la plage de luminosité supérieure du signal vidéo, et pour réglage du niveau du courant continu du signal vidéo, deux valeurs de luminosité (h1, h2) dans la plage de luminosité la plus inférieure du signal vidéo.

6. Montage pour la mise en oeuvre du procédé selon la revendication 1, caractérisé par le fait qu'il est prévu pour chaque opération de réglage, respectivement deux comparateurs (H1, H2; H3, H4) comparant le signal de luminosité (hs) avec une valeur de seuil de la luminosité (h1, h2; h3, h4), parmi lesquels chacun est relié, côté sortie, avec l'entrée d'autorisation d'un compteur respectif (Z1, Z2; Z3, Z4) qui reçoit, en plus, respectivement la cadence d'image (S2) ainsi que les impulsions de remise à l'état initial (S3) qui signalent la fin de l'image, et que la sortie de chaque compteur (Z1, Z2; Z3, Z4) est reliée, par respectivement un second comparateur (K1, K2; K3, K4) comparant le nombre d'impulsions reçues à la valeur limite correspondante et donnée à l'avance (k1, k2; k3, k4), à respectivement une entrée d'un circuit de commande (ST1) chargé également par les impulsions de remise à l'état initial (S3) qui signalent la fin de l'image.

7. Montage selon la revendication 6, caractérisé par le fait que le circuit de commande (ST1) est constitué avec un compteur bidirectionnel.

0 034 737

FIG.1a

FIG.1b

FIG.2

7

FIG.3

0 034 737